## Europäisches Patentamt

## European Patent Office

## Office européen des brevets

(19)

(11) Veröffentlichungsnummer: **0 177 767**

**B1**

(12) # EUROPÄISCHE PATENTSCHRIFT

(45) Veröffentlichungstag der Patentschrift:
31.08.88

(51) Int. Cl.⁴: **B 60 T 1/08,** F 16 D 57/06,
F 16 D 65/78

(21) Anmeldenummer: **85111276.3**

(22) Anmeldetag: **06.09.85**

(54) Betriebsbremse für einen LKW oder Omnibus.

(30) Priorität: **09.10.84 DE 3436960**

(43) Veröffentlichungstag der Anmeldung:
**16.04.86 Patentblatt 86/16**

(45) Bekanntmachung des Hinweises auf die Patenterteilung:
**31.08.88 Patentblatt 88/35**

(84) Benannte Vertragsstaaten:
**DE FR GB IT SE**

(56) Entgegenhaltungen:
**EP-A-0 073 686**
**DE-A-1 907 652**
**DE-A-2 208 172**
**DE-A-2 804 399**
**DE-C-897 212**
**FR-A-1 517 031**
**FR-A-1 603 896**
**FR-A-2 035 355**
**FR-A-2 108 951**
**FR-A-2 251 736**
**FR-A-2 258 563**
**FR-A-2 442 740**
**US-A-3 863 739**
**US-A-3 882 973**

(73) Patentinhaber: **M A N Nutzfahrzeuge GmbH,
Dachauer Strasse 667 Postfach 50 06 20, D-8000
München 50 (DE)**

(72) Erfinder: **Lexen, Gerald, Thelottstrasse 14,
D-München 45 (DE)**

LIBER, STOCKHOLM 1988

## Beschreibung

Die Erfindung betrifft eine Betriebsbremse für Fahrzeuge mit Einzelmerkmalen der im Oberbegriff des Anspruches 1 angegebenen Art.

Eine derartige Betriebsbremse ist beispielsweise aus der FR-A-2 035 355 bekannt. Mit den dort verwendeten Organen läßt sich die Bremsleistung aber nur verältnismäßig schlecht dosieren.

Es ist deshalb Aufgabe der Erfindung, die eingangs genannte Betriebsbremse dahingehend weiterzubilden, daß mit ihren Organen eine fein dosierbare Bremsleistung einstellbar ist.

Diese Aufgabe ist erfindungsgemäß durch eine Betriebsbremse mit den im Anspruch 1 gekennzeichneten Merkmalen gelöst. Vorteilhafte Details sind in den Unteransprüchen angegeben.

Hierdurch ergeben sich folgende Vorteile.

Die fein dosierbare Bremsleistung wird in der Einrichtung zur Erzeugung des Gegendruckes in Form von Wärme frei und kann über eine dieser Einrichtung nachgeschaltete, beliebig dimensionierbare Kühleinrichtung abgeführt werden. Die feine Dosierung wird einerseits über die Anzahl von Drossel- bzw. Druckbegrenzungsventilen und zum anderen über deren gezielte rechnergesteuerte Betätigung erzielt. Die Randbedingungen hierfür werden vom Bremspedal und der Verdrängungspumpe geliefert. Die Bremspedalstellung wird von einem Potentiometer und die Pumpendrehzahl von einem Drehzahlfühler umgesetzt und in den Rechner geliefert, so daß das Ansprechverhalten der erfindungsgemäßen Betriebsbremse jenem einer herkömmlichen, meist durch Druckluft betätigten Betriebsbremse ähnelt.

Die erfindungsgemäße Betriebsbremse kann grundsätzlich als alleinige Bremse ausgebildet sein, wobei jedem der Fahrzeugräder eine dann vorzugsweise als Radnabenpumpe ausgebildete Verdrängungspumpe zugeordnet ist. Die zu jeder dieser Verdrängungspumpen gehörende, deren Drehzahl berücksichtigende Steuerung kann hierbei so ausgelegt sein, daß - wie dies bei der Betriebsbremse üblich ist - die Vorderräder stärker abgebremst werden als die Hinterräder. Wegen des praktisch verzögerungsfreien Ansprechverhaltens der erfindungsgemäßen Betriebsbremse ist es möglich, dieser ein Antiblockiersystem zuzuordnen.

Schließlich ist es auch möglich, die erfindungsgemäße Bremse als Anhängerbremse auszubilden, wobei zur Betätigung der Bremse nicht mehr, wie bisher, eine störanfällige Druckluftverbindung mit dem Zugfahrzeug hergestellt werden muß, sondern lediglich eine Signalverbindung, welche den einzelnen Bremseinrichtungen, die den einzelnen Rädern des Anhängers zugeordnet sind, ein Signal über die Stellung des Bremspedales zuführt. Der Anhänger kann seinerseits mit einem eigenen, autonomen Antiblockiersystem ausgestattet sein.

Die Kühleinrichtung der erfindungsgemäßen Betriebsbremse kann mit der Kühleinrichtung des Antriebsmotors gekoppelt sein. In jedem Falle ist es aber möglich, die Kühleinrichtung so zu dimensionieren und an einer solchen Stelle anzubringen, daß die Dauerbremsung des mit der erfindungsgemäßen Betriebsbremse ausgestatteten Fahrzeuges möglich ist, ohne daß Schwunderscheinungen auftreten.

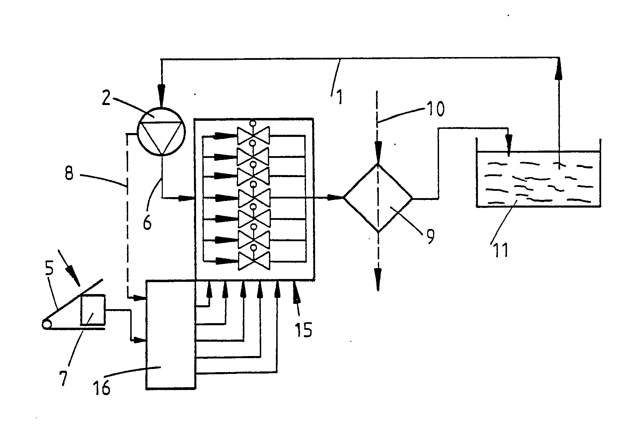

Nachstehend ist die erfindungsgemäße Betriebsbremse beispielhaft anhand der Zeichnung noch näher erläutert.

In einem nicht dargestellten Fahrzeug ist ein Bremspedal (5) vorgesehen, welches in Pfeilrichtung vom Fahrer niedergetreten werden kann. Dieses Bremspedal (5) ist mit einem Potentiometer (7) gekoppelt, wobei die Kopplung und/oder das Potentiometer so ausgebildet sind, daß über eine schematisch angedeutete Signalleitung das Potentiometer (7) ein Strom verläßt, der zur Lage des Bremspedales (5) proportional ist. Dieses für die Lage des Bremspedales (5) repräsentatives Signal wird in einen Rechner (16) eingespeist.

Die eigentliche Bremseinrichtung weist eine Verdrängungspumpe (2) auf, welche fest im Antriebsstrang des entsprechenden Fahrzeuges an einer Achse angebracht ist. Die Verdrängungspumpe (2) ist über eine Saugleitung (1) mit einem Vorratsbehälter (11) für hydraulische Flüssigkeit verbunden. An die Verdrängungspumpe (2) ist ferner ausgangsseitig eine Druckleitung (6) angeschlossen, welche in eine Einrichtung (15) zur Erzeugung eines Gegendruckes einmündet. Dieser ist ein Kühler bzw. Wärmeaustauscher (9) nachgeschaltet, welcher von einem Wärmeaustauschmedium (10) durchströmt wird, das von der Außenluft, dem Motorkühlwasser, dem Wärmeaustauschmedium für die Fahrzeugheizung oder dgl. gebildet ist. Die gekühlte hydraulische Druckflüssigkeit wird nach Verlassen des Wärmeaustauschers (9) wieder dem Vorratsbehälter (11) zugeleitet.

Die Verdrängungspumpe (2) ist über eine Signalleitung (8) mit dem Rechner (16) verbunden. Diese Signalleitung (8) überträgt ein von einem Drehzahlfühler erfaßtes, für die Drehzahl der Pumpe (2) repräsentatives Signal an den Rechner (16).

Die steuerbare Einrichtung zur Erzeugung des Gegendruckes ist durch eine Ventilanordnung (15) gebildet, die aus einer Reihe absperrbarer Einzel-Druckbegrenzungsventile besteht, deren Auslösedruck jeweils unterschiedlich hoch ist.

Im Rechner (16) wird das über die Signalleitung (8) von der Pumpe (2) ankommende Drehzahlsignal mit dem vom Potentiometer (7) ankommenden Lagesignal für das Bremspedal (5) verglichen. Entsprechend wird dann über einen der Steuerkanäle, mittels welcher der Rechner (16) mit der Ventil-Anordnung (15) verbunden ist, jenes Einzel-Druckbegrenzungsventil angesteuert, dessen fest eingestellter Auslösedruck mit dem gerade erforderlichen Grenz-Gegendruck übereinstimmt.

Es ist auch möglich, anstelle der Druckbegrenzungsventile Drosselventile mit gleichartiger oder unterschiedlicher Drosselwirkung zu verwenden. Hierbei stellt der Rechner (16) fest, wieviele bzw. welche der Drosselventile gleichzeitig geöffnet werden müssen, um die gerade erforderliche Drosselwirkung zu erreichen, so daß sich eine Bremswirkung gerade in der Größe einstellt, die der Fahrer durch das entsprechende Niederdrücken des Bremspedales erwartet.

## Patentansprüche

1. Betriebsbremse für einen Lkw, Omnibus oder sonstige Straßen-, Gelände- oder Schienenfahrzeuge, mit einer über ein Bedienungselement durch den Fahrer ansteuerbaren hydraulischen Verzögerungseinrichtung, die bevorzugt am Antriebsstrang des Fahrzeugs angebracht ist sowie einer Kühleinrichtung zum Abführen von Bremswärme, die im Strömungsumlauf der hydraulischen Verzögerungseinrichtung angeordnet ist, wobei die hydraulische Verzögerungseinrichtung als Verdrängungspumpe ausgebildet ist, der druckseitig eine steuerbare Einrichtung zur Erzeugung eines Gegendruckes und dieser wiederum die Kühleinrichtung nachgeschaltet ist, dadurch gekennzeichnet, daß das durch das Bremspedal (5) gebildete Bedienungselement mit einem Potentiometer (7) und dessen Ausgang wiederum mit einem Rechner (16) verbunden ist, aus dem ausgangsseitig die Organe der Einrichtung (15) zur Erzeugung des Gegendruckes, welche durch mehrere parallel geschaltete, einzeln absperrbare Drossel- bzw. Druckbegrenzungsventile gebildet sind und eingangsseitig ein an der Pumpe (2) angeordneter Drehzahlfühler angeschlossen ist, wobei im Rechner (16) das von der Pumpe (2) ankommende Drehzahlsignal mit dem vom Potentiometer (7) ankommenden Bremspedallagesignal verglichen und aufgrund dieses Vergleiches die Anzahl jener Drossel- bzw. Druckbegrenzungsventile für die Einstellung des gerade erforderlichen Grenzgegendruckes angesteuert wird.

2. Betriebsbremse nach Anspruch 1, dadurch gekennzeichnet, daß die Verdrängungspumpe (2) auf ein konstantes Fördervolumen ausgelegt ist.

3. Betriebsbremse nach einem der vorhergehenden Ansprüche, dadurch gekennzeichnet, daß die Verdrängungspumpe (2) als Radnabenpumpe ausgebildet ist.

4. Betriebsbremse nach einem der Ansprüche 1 und 2, dadurch gekennzeichnet, daß die Verdrängungspumpe (2) an einer Hinterachse des Fahrzeuges angebracht ist.

## Claims

1. A service brake for a lorry or omnibus or other road or offroad or rail vehicles, the brake comprising: a hydraulic retarder actuatable by the driver by way of a control element and disposed preferably in the vehicle drive line; and a cooler for removing the heat of braking, the cooler being disposed in the flow circulation of the hydraulic retarder, the same being in the form of a displacement pump followed on its delivery side by controllable means producing a back pressure, such means being followed by the cooler, characterised in that the control element, in the form of the brake pedal (5), is connected to a potentiometer (7) and the output thereof is connected to a computer (16), the output thereof being connected to the elements of the means (15) for producing the back pressure, such means being embodied by a number of parallel-connected individually closable throttle or pressure-limiting valves, a speed sensor which is disposed on the pump (2) being connected to the computer input, the computer (16) comparing the speed signal delivered by the pump (2) with the brake pedal position signal arriving from the potentiometer (7) and on the basis of such comparison controlling the number of throttle or pressure-limiting valves in order to produce the exactly necessary critical back pressure.

2. A brake according to claim 1, characterised in that the displacement pump (2) is designed for a constant delivery volume.

3. A brake according to any of the previous claims, characterised in that the displacement pump (2) is a wheel hub pump.

4. A brake according to claim 1 and/or 2, characterised in that the displacement pump (2) is disposed on a rear axle of the vehicle.

## Revendications

1. Frein de service pour camion, autobus ou autre véhicule routier, tout-terrain ou ferroviaire, comportant une installation de décélération hydraulique commandée à l'aide d'un élément de manoeuvre par le conducteur, installation qui est de préférence montée dans la ligne de transmission du véhicule et comporte une installation de refroidissement pour évacuer la chaleur de freinage, dans l'installation de refroidissement montée dans le circuit de l'installation de décélération hydraulique, cette installation de décélération hydraulique étant constituée par une pompe de refoulement dont le côté haute pression est suivi par une installation commandée pour générer une contrepression, installation elle-même suivie par l'installation de refroidissement, frein caractérisé en ce que: l'élément de manoeuvre est constitué par la pédale de frein (5) et d'un potentiomètre (7), la sortie de cet élément étant reliée au calculateur (16) et en sortie du calculateur, les organes de l'installation (15) générant la contre-pression sont formés par plusieurs soupapes d'étranglement ou de limitation de pression susceptibles d'être fermées individuellement et qui sont montées en parallèle, et l'entre est reliée à un capter de vitesse de rotation associé à la pompe (2), le calculatuer (16) comparant le signal de vitesse de rotation fourni par la pompe (2) au signal de la position de la pédale de frein fourni par le potentiomètre (7) et partant de cette comparaison, le calculateur commande le nombre de soupapges d'étranglement ou de limitation de pression pour régler la contre-pression nécessaire précisément.

2. Frein de service selon la revendication 1, caractérisé en ce que la pompe de refoulement (2) est une pompe à débit constant.

3. Frein de service selon l'une des revendications précédentes, caractérisé en ce que la pompe de refoulement (2) est une pompe de moyeu de roue.

4. Frein de service selon l'une des revendications 1 et 2, caractérisé en ce que la pompe de refoulement (2) est montée sur l'essieu arrière du véhicule.

0 177 767